# EUROPÄISCHE PATENTSCHRIFT

(11) **EP 1 910 022 B1**
(45) Veröffentlichungstag und Bekanntmachung des Hinweises auf die Patenterteilung: **29.06.2011**
(21) Anmeldenummer: 06776183.3
(22) Anmeldetag: 11.07.2006
(51) Int. Cl.: B23Q 17/00

(54) **ABFRAGESYSTEM FÜR EINE BEWEGTE MASCHINENKOMPONENTE**
POLLING SYSTEM FOR A MOVED MACHINE COMPONENT
SYSTEME D'INTERROGATION POUR ELEMENT DE MACHINE MOBILE

(30) Priorität: 27.07.2005 DE 102005035042
(43) Veröffentlichungstag der Anmeldung: 16.04.2008
(60) Teilanmeldung: 10004468.4
(73) Patentinhaber: Schunk GmbH & Co. KG Spann- und Greiftechnik, 74348 Lauffen am Neckar (DE)
(72) Erfinder: SCHUSTER, Andreas, 71543 Wüstenrot/Neulautern (DE); FELLHAUER, Bruno, 74336 Brackenheim (DE)
(74) Vertreter: Bulling, Alexander
(86) Internationale Anmeldenummer: PCT/EP2006/006753
(87) Internationale Veröffentlichungsnummer: WO 2007/012397

(56) Entgegenhaltungen:
- EP-A1- 1 025 952
- DE-A1- 3 732 595
- DE-A1- 10 307 565
- DE-C1- 4 229 569
- US-A- 4 090 802
- US-A1- 2002 002 885

## Beschreibung

Die Erfindung betrifft ein Abfragesystem für eine bewegte Maschinenkomponente. Ein derartiges Abfragesystem ist beispielsweise aus der DE 103 07 565 A1 vorbekannt. Bei diesem Stand der Technik werden in einem rotierenden Kraftspannfutter druckbeaufschlagte Druckräume mittels Drucksensoren überwacht. Die Drucksensoren werden dabei von mitrotierenden Akkumulatoren mit elektrischer Energie versorgt. Den Drucksensoren ist dabei ein stationärer, nicht rotierender Empfänger zugeordnet, der an eine Einheit zur Auswertung der vom Drucksensor empfangenen Signale angeschlossen ist.

Bei einem derart vorbekannten Stand der Technik wird der Druck vom elektrische Energie benötigten Drucksensor gemessen und die vom Drucksensor generierten Signale werden mittels Funk an den Empfänger übersandt. Zum einen wird folglich elektrische Energie zum Betreiben des Sensors bei der Druckmessung und zum anderen für das Versenden der Funkwellen benötigt. Augrund der nur beschränkt vorhandenen elektrischen Energie der Akkumulatoren ist die Betriebsdauer vergleichsweise kurz.

Ein Abfragesystem nach dem Oberbegriff des Anspruchs 1 ist aus US 4 090 802 bekannt.

Der vorliegenden Erfindung liegt die Aufgabe zugrunde, ein Abfragesystem für eine bewegte Maschinenkomponente zur Verfügung zu stellen, das mit vergleichsweise wenig elektrischer Energie auskommt, aufgrund des geringen Energieverbrauchs vergleichsweise lange Wartungsintervalle und eine erhöhte Funktionssicherheit aufweist.

Diese Aufgabe wird gelöst durch ein Abfragesystem für eine bewegte Maschinenkomponente gemäss Anspruch 1.

Das Abfragesystem umfasst eine Abfragebaugruppe zur maschinenkomponentenseitigen Anordnung mit wenigstens einem bei einem bestimmten Zustand der Maschinenkomponente oder bei einer bestimmten Position eines Maschinenkomponententeils versorgungsenergiefrei-arbeiten Schalter, mit einer die Schaltzustände des Schalters auswertenden und die ausgewerteten Schaltsignale mit digitalen Funksignalen versendenden Funksendeinheit und mit einer elektrischen Energiequelle zur Versorgung der Funksendeinheit, und umfassend eine gegenüber der Abfragebaugruppe stationär anordenbaren Funkempfangseinheit zum Empfangen und Auswerten, Weiterleiten und/oder Anzeigen der von der Funksendeeinheit empfangenen Signale.

Dadurch ergibt sich der Vorteil, dass ein versorgungsenergiefrei-arbeitender Schalter Verwendung findet, der selbst keine elektrische Energie verbraucht. Der Schalter wird bei einem bestimmten Zustand der bewegbaren Maschinenkomponente oder bei einer bestimmten Position eines Maschinenkomponententeils betätigt. Beim erfindungsgemäßen Abfragesystem wird lediglich elektrische Energie zur Auswertung der Schaltsignale, zum Umwandeln der Schaltsignale in digitale Funkschaltsignale und zum Aussenden der digitalen Funkschaltsignale verwendet. Die Energiequelle der maschinenkomponentenseitigen Abfragebaugruppe versorgt folglich lediglich die Funksendeinheit mit elektrischer Energie. Dadurch, dass keine analogen Signale der Schaltzustände, sondern bereits ausgewertete, digitalisierte Funkschaltsignale versendet werden, wird zudem der Energieverbrauch der Funksendeeinheit reduziert. Das Versenden der digitalen Funkschaltsignale kann, im Vergleich zum Versenden von analogen Signalen, vergleichsweise schnell, und deshalb energiesparend erfolgen, nämlich im Bereich unterhalb einer Millisekunde.

Beim diesem Abfragesystem empfängt die Funkempfangseinheit die digitalen Signale der Funksendeinheit und wertet diese aus, leitet sie weiter und/oder zeigt sie an. Insbesondere ist denkbar, dass die Funkempfangseinheit eine Schnittstelle zu einer Maschinensteuerung, die die bewegte Maschinenkomponente ansteuert, umfasst.

Zum weiteren Senken des Energieverbrauchs der Funksendeeinheit ist vorgesehen, dass die Funksendeeinheit derart ausgebildet ist, dass nur bei einer Änderung des Schaltzustandes des Schalters die Funkschaltsignale ausgesendet werden. Insofern wird folglich nur dann elektrische Energie zum Aussenden der Funksignale benötigt, wenn tatsächlich eine Änderung des Schaltzustands vorliegt.

Erfindungsgemäß ist vorgesehen, dass die Funksendeeinheit derart ausgebildet ist, dass sie Funkkontaktkontrollsignale in regelmäßigen zeitlichen Abständen aussendet und dass die Empfangseinheit diese Signale auswertet, weiterleitet und/oder anzeigt. Damit kann kontrolliert werden, ob ein ausreichender Funkkontakt vorhanden ist. Werden die Funkkontaktkontrollsignale nicht empfangen, kann beispielsweise eine Störmeldung erzeugt, weitergeleitet und/oder angezeigt werden.

Bei einer vorteilhaften Ausgestaltung der Erfindung ist vorgesehen, dass die Funksendeeinheit derart ausgebildet ist, dass sie den Status der Energiequelle überwacht und diesbezügliche Energiekontrollsignale aussendet und dass die Empfangseinheit diese Signale auswertet, weiterleitet und/oder anzeigt. Damit ist es möglich, den Status der Energiequelle zu überwachen. Bei zu schwacher Energiequelle und/oder bei einer Störung in der Energiequelle kann dies erkannt werden. Gegebenenfalls können dann Schutzmaßnahmen, wie beispielsweise ein Beenden der Bewegung der Maschinenkomponente eingeleitet werden.

Das Vorsehen der Energiequellenkontrollsignale und/oder der Funkkontaktkontrollsignale dienen insbesondere zur erhöhten Funktionssicherheit des Abfragesystems. Ein Ausfallen des Abfragesystems kann damit sicher und frühzeitig erkannt werden.

Um dennoch den Verbrauch der elektrischen Energie möglichst gering zu halten, ist erfindungsgemäß vorgesehen, dass die Energiekontrollsignale und/oder die Funkkontaktkontrollsignale in regelmäßigen zeitlichen Abständen abgefragt und/oder versendet werden. Insbesondere können die zeitlichen Abstände je nach Sicherheitsrelevanz der bewegten Maschinenkomponente eingestellt werden. Bei Vorsehen einer Energiequelle in Form einer Batterie kann es beispielsweise ausreichend sein, das Energiequellenkontrollsignal nur einmal innerhalb von mehreren Sekunden zu versenden. Das Energiequellenkontrollsignal und/oder das Funkkontaktkontrollsignal wird dabei vorteilhafterweise als digitales Signal von der Funksendeeinheit versandt.

Gemäß einer weiteren Ausführungsform der Erfindung ist die Funksendeeinheit in einen Betriebsmodus, einen Einstellmodus und einen Lagermodus schaltbar. Der Betriebsmodus wird beim Normalbetrieb der Maschinenkomponente verwendet und ist besonders energiesparend. Der Einstellmodus dient zum Einstellen und Kalibrieren des Abfragesystems, wobei hier neben den Funksignalen optische Signalgeber vorhanden sein können, um das Aussenden der Funkschaltsignale beziehungsweise das Empfangen der Funkschaltsignale optisch darzustellen. Im Einstellmodus wird folglich ein höherer Energieverbrauch hingenommen. Im dritten Modi, dem Lagermodus, wird die Energiequelle von der Funksendeeinheit elektrisch getrennt, wodurch kein Verbrauch von Energie stattfinden kann. Durch Vorsehen der drei verschiedenen Modi kann folglich der Energieverbrauch optimiert werden.

Dabei ist denkbar, dass das Schalten zwischen den Modi mittels eines berührungslos schaltenden Magnetelements erfolgt. Das Vorsehen eines berührungslos schaltenden Magnetelements hat den Vorteil, dass auch bei längerer Lagerung der Funksendeeinheit keine Korrosion auftritt und damit die Funktionssicherheit des Abfragesystems erhöht wird. Als Magnetelement kommt beispielsweise ein Magnetstift in Betracht, durch den in verschiedenen Stellungen verschiedene Modi zur Anwendung kommen.

Vorteilhafterweise kann erfindungsgemäß die Energiequelle als Batterie oder als ein autarker Energieerzeuger, der aus vorhandener Fremdenergie elektrische Energie erzeugt, vorgesehen sein. Dabei kommen als Energieerzeuger insbesondere Solarzellen in Betracht.

Gemäß der Erfindung können als Schalter Tastschalter, Stellschalter, Druckschalter oder magnetische Näherungsschalter Verwendung finden. Entscheidend für die Schalter ist, dass sie ohne elektrische Versorgungsenergie arbeiten.

Das erfindungsgemäße Abfragesystem kann Verwendung finden mit einer um eine Rotationsachse drehbar anordenbare Maschinenkomponente in Form eines Kraftspannfutters. Das erfindungsgemäße Abfragesystem kann auch zum Einsatz kommen in einer mittels eines Handhabungssystems bewegbaren Maschinenkomponente in Form einer Automationskomponente, wobei die Abfragebaugruppe in oder an der Automationskomponente und die Funkempfangseinheit gegenüber der Automationskomponente stationär, das heißt stillbleibend, angeordnet ist. Die Automationskomponente wird folglich mittels eines Handhabungssystems, beispielsweise mittels eines Roboterarms, im Raum bewegt. Über das erfindungsgemäße Abfragesystem, das in oder an der Automationskomponente angeordnet sein kann, können bestimmte Positionen und/oder bestimmte Zustände der Automationskomponente beziehungsweise von Automationskomponententeilen abgefragt werden.

Als Automationskomponenten kommen insbesondere Greif- oder Spanneinrichtungen in Betracht, die einen Grundkörper und im Grundkörper verfahrbar angeordnete Backen umfassen. Mit dem erfindungsgemäßen Abfragesystem können beispielsweise die Positionen der Backen abgefragt und der Funkempfangseinheit mitgeteilt werden. Als Automationskomponente kommt außerdem eine Schwenkeinheit in Betracht, die ein in einem Grundkörper drehbar angeordnetes Schwenkelement aufweist. Mit der Abfragebaugruppe kann beispielsweise die Position des Schwenkelements abgefragt und mitgeteilt werden. Ferner kann eine erfindungsgemäße Automationskomponente ein Schnellwechselsystem sein, wobei hier mit dem Erfindungsgegenstand abgefragt werden kann, ob der Werkzeugwechsel erfolgt ist. Ferner ist denkbar, dass als Automationskomponente ein Kollisions- und Überlastschutz Verwendung findet, der den Roboter beziehungsweise roboterseitige Handhabungsgeräte wirksam gegen einen Schaden aus Kollision oder Überlassbedingungen schützt. Das erfindungsgemäße Abfragesystem kann in diesem Zusammenhang den Eintritt einer Kollision oder einer Überlastbedingung erfassen und mitteilen. Gemäß der Erfindung kann eine Automationskomponente ebenfalls ein Linearantrieb und/oder ein Hubantrieb sein, wobei mit dem erfindungsgemäßen Abfragesystem die Position des mit dem Antrieb verfahrbaren Hubeelementes abgefragt und mitgeteilt werden kann.

Auch können noch weitere, nicht genannte Automationskomponenten ein erfindungsgemäßes Abfragesystem aufweisen.

Weitere Einzelheiten und Vorteile der Erfindung sind der folgenden Beschreibung zu entnehmen, in der die in der Figur dargestellten Ausführungsbeispiele näher beschrieben und erläutert sind.

Es zeigen:
- Figur 1: verschiedene Automationskomponenten;
- Figur 2: eine Abfragebaugruppe gemäß der Erfindung mit einer Funksendeeinheit samt zwei Schalter für eine Automationskomponente gemäß Figur 1;
- Figur 3: eine Funksendeeinheit für ein Kraftspannfutter;
- Figur 4: ein Kraftspannfutter samt einer Funksendeeinheit gemäß Figur 3; und
- Figur 5: eine Funkempfangseinheit für eine Funksendeeinheit gemäß Figur 2 oder Figur 3.

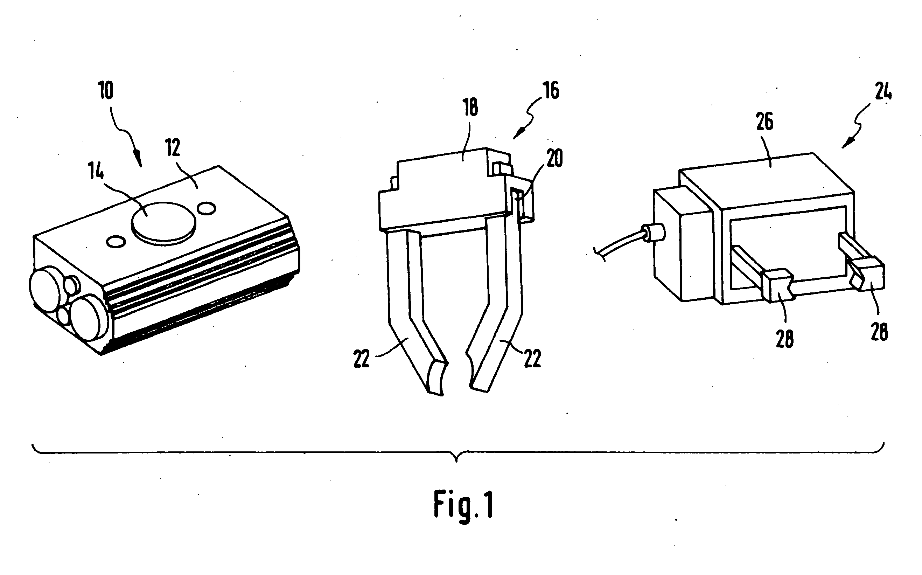

In der Figur 1 sind verschiedene Automationskomponenten dargestellt. Zum einen ist eine Schwenkeinheit 10 gezeigt, die ein Grundgehäuse 12 und ein Schwenkelement 14 umfasst. Ferner ist eine Parallelgreifeinrichtung 16 gezeigt, die ein Grundgehäuse 18 sowie zwei im Grundgehäuse aufeinander zu und voneinander weg bewegbare Backen 20 und an den Backen angeordnete Greiffinger 22 umfasst. Als dritte Automationskomponente ist in der Figur 1 eine Schwenkgreifeinheit 24 dargestellt, die ein Grundgehäuse 26 und zwei aufeinander zu beziehungsweise voneinander weg verschwenkbare Greiffinger 28 aufweist. Die in der Figur 1 gezeigten Automationskomponenten können beispielsweise mittels Handhabungssystemen im Raum bewegbar angeordnet sein. Zur Lage- oder Positionsabfrage der jeweils bewegten Bauteile 14, 22, 28 können die Maschinenkomponententeile 10, 16, 24 Abfragesysteme umfassen.

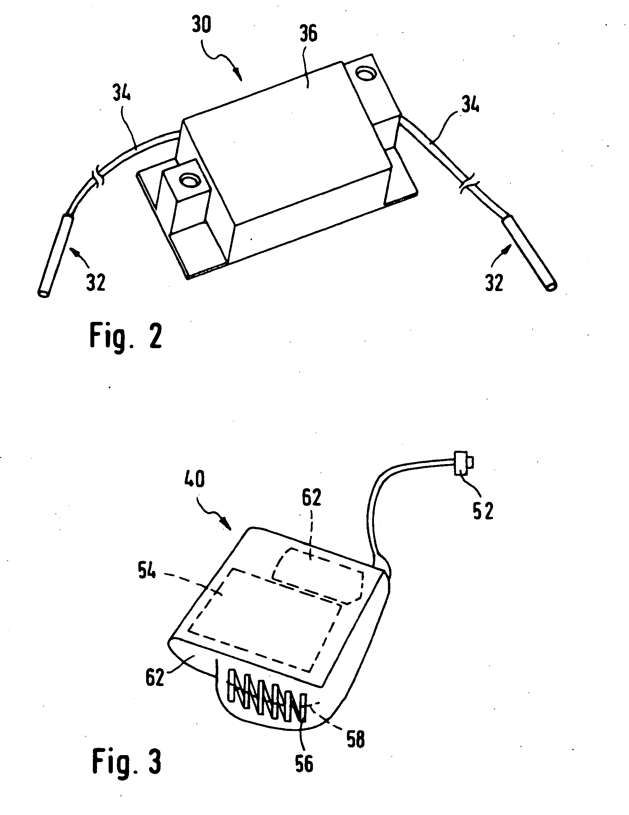

Ein derartiges Abfragesystem umfasst eine automationskomponentenseitige Abfragebaugruppe, die beispielsweise bei der Schwenkeinheit 10 am Grundgehäuse 12, beim Parallelgreifer 16 am Grundgehäuse 18 und beim Schwenkgreifer 24 am Grundgehäuse 26 angeordnet sein kann. Eine derartige Abfragebaugruppe ist in der Figur 2 dargestellt und mit dem Bezugszeichen 30 gekennzeichnet. Die Abfragebaugruppe 30 umfasst ihrerseits zwei versorgungsenergiefrei-arbeitende Schalter 32, die über elektrisch leitende Kabel 34 mit einer Funksendeeinheit 36 verbunden sind. Die Schalter 32 können dabei beispielsweise als magnetische Näherungsschalter in Form von Reedschaltern ausgebildet sein, die dann schalten, wenn ein ferromagnetisiertes Element, bzw. ein Dauermagnet in ihren Detektionsbereich gelangt. Derartige Schalter benötigen keine Eigenenergieversorgung.

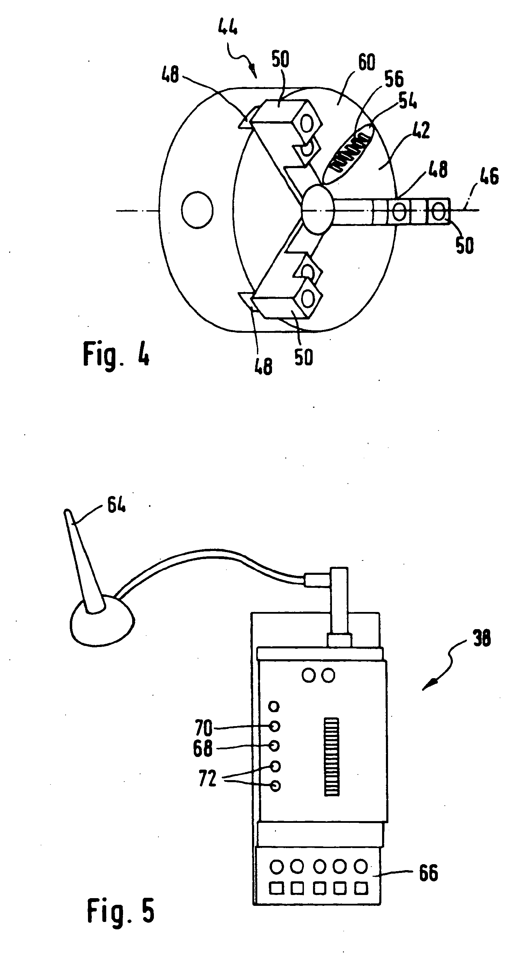

Die Funksendeeinheit 36 wertet die Schaltsignale der Schalter 32 aus und versendet digitale Funkschaltsignale, beispielsweise in Form von Funktelegrammen, an eine in der Figur 5 dargestellte Funkempfangseinheit 38. Die in der Figur 2 dargestellte Abfragebaugruppe 30 umfasst ferner eine nicht dargestellte Energiequelle in Form einer Batterie. Anstelle oder zusätzlich zu der Batterie ist es denkbar, einen Energieerzeuger, wie beispielsweise Solarzellen, vorzusehen.

Dadurch, dass die Schalter 32 keine elektrische Energie benötigen, und dass bereits ausgewertete, digitale Schaltsignale versendet werden, benötigt die Funksendeeinheit vergleichsweise wenig elektrische Energie. Wird beispielsweise pro Sekunde ein digitales Funktelegramm von der Funksendeeinheit versendet, so beträgt die Lebensdauer bei heute erhältlichen, herkömmlichen Batterien fünf bis zehn Jahre. Eine derart lange Lebensdauer der Batterie ergibt sich insbesondere dadurch, dass die Signaldauer der versendeten digitalen Funkschaltsignale kürzer als eine Millisekunde ist.

In der Figur 3 ist eine Abfragebaugruppe 40 dargestellt, die zur Anordnung in eine bewegte Maschinenkomponente in Form eines um eine Rotationsachse 46 drehbaren, in der Figur 4 dargestellten Kraftspannfutters 44 mit einem Futterkörper 42 vorgesehen ist. Im Futterkörper 42 sind in radialer Richtung Backenführungen 48 für in radialer Richtung verlagerbare Spannbacken 50 vorgesehen. Mit den Spannbacken 50 können Werkstücke zu drehenden Bearbeitung zentriert gehalten werden.

Wie in der Figur 3 dargestellt umfasst die Abfragbaugruppe 40 einen versorgungsenergiefrei-arbeitenden Schalter 52, insbesondere einen Druckschalter zur Überwachung des Spanndruckzustandes eines Spanndruckmittels, mit dem der Spanndruck der Backen 50 erzeugt wird. Ferner umfasst die Abfragebaugruppe 40 eine Funksendeeinheit 54 zur Auswertung der Schaltzustände des Druckschalters 52 und zur Versendung der ausgewerteten Schaltsignale mittels digitalen Funksignalen. Die Funksendeeinheit 54 umfasst dabei eine schraubenfederartig ausgebildete Antenne 56, die entlang einer gebogenen Linie 58 über eine senkrecht zur Rotationsachse verlaufende Oberfläche 60 des Futterkörpers 42 hervorragt. Die gebogene Linie 58, entlang derer die Antenne 56 verläuft, ist insbesondere in Figur 3 deutlich zu erkennen. Dabei schließt die der Antenne 56 zugewandte umlaufende Kante 62 bei im Futterkörper 42 eingebautem Zustand der Abfragebaugruppe 40 wenigstens weitgehend bündig mit der Oberfläche 42 ab. Eine derartige Anordnung hat den Vorteil, dass über die gegenüber der Oberfläche 42 hervorragende Antenne 56 optimal, auch bei schnell drehendem Kraftspannfutter 44, Funksignale unter vergleichsweise geringem Energieverbrauch versendet werden können.

In der Figur 4 ist die Abfragebaugruppe 40 in das Kraftspannfutter 44, beziehungsweise in dessen Futterkörper 42, eingebaut. Der Futterkörper 42 sieht hierzu eine den Außenabmessungen der Abfragebaugruppe 40 komplementäre Ausnehmung vor. Wie bereits erläutert, steht die Antenne 56 im eingebauten Zustand in axialer Richtung über die senkrecht zur Rotationsachse 46 verlaufende Oberfläche vor.

Wie aus der Figur 3 ferner zu erkennen ist, umfasst die Abfragebaugruppe 40 eine Energiequelle in Form einer Batterie 62. Die Batterie 62, die Funksendeinheit 54 und die Antenne 56 sind dabei vollständig in einen Kunstverguss eingebettet. Hierdurch wird ein optimaler Schutz erreicht. Der Druckschalter 52, der über ein Kabel mit der Funksendeeinheit 54 verbunden ist, befindet sich im eingebauten Zustand im oder am Druckraum des Spanndruckmittels.

Wie bereits erwähnt, ist in der Figur 5 eine stationär anzuordnende Funkempfangseinheit 38 dargestellt, die eine Antenne 64 umfasst, mit der die von der Funksendeeinheit 36 gemäß Figur 2 und/oder der Funksendeeinheit 40 gemäß Figur 4 digitale Funksignale empfangen werden. Die Funkempfangseinheit 38 weist dabei eine Schnittstelle 66 zur Verbindung mit einer Maschinensteuerung, insbesondere mit der die Automationskomponenten 10, 16, 14 gemäß Figur 1 und/oder das Kraftspannfutter 44 gemäß Figur 4 ansteuerende Maschinensteuerung auf. Mit der Funkempfangseinheit 38 können ferner ausgesendete digitale Funkschaltsignale abgefragt werden.

Die in den Figuren dargestellten Funksendeeinheiten können derart ausgebildet sein, dass sie den Status der Energiequellen überwachen und diesbezügliche Energiequellenkontrollsignale aussenden. Sollten die Energiequellenkontrollsignale einen bestimmten Wert unterschreiten, so kann dies von der Funkempfangseinheit 38 erkannt, angezeigt und/oder an die Maschinensteuerung weitergeleitet werden.

Ferner können die Funksendeeinheiten 30, 44 derart ausgebildet sein, dass sie Funkkontaktkontrollsignale aussenden, die von der Funkempfangseinheit 38 empfangen werden. Sollten regelmäßig ausgesendete Funkkontaktkontrollsignale nicht empfangen werden, so kann dies zu einer Störmeldung führen.

Die Funkempfangseinheit 38 sieht verschiedene Kontrollleuchten vor, nämlich eine Energiequellenkontrollleuchte 68 der Funksendeeinheit 40, eine Funkkontaktkontrollleuchte 70 sowie zwei Schaltkontaktkontrollleuchten 72, zur Kontrolle der Schaltzustände der Schalter 32, 52. Ferner ist eine Kontrollleuchte 74 für die Versorgungsspannung der Funkempfangseinheit 38 vorhanden.

## Patentansprüche

1. Abfragesystem für eine bewegte Maschinenkomponente (10, 16, 24, 44), umfassende eine Abfragebaugruppe (30, 40) zur maschinenkomponentenseitigen Anordnung mit wenigstens einem bei einem bestimmten Zustand der Maschinenkomponente oder bei einer bestimmten Position eines Maschinenkomponententeils versorgungsenergiefrei-arbeitenden Schalter (32, 52), mit einer die Schaltzustände des Schalters (32, 52) auswertenden und die ausgewerteten Schaltsignale mit digitalen Funkschaltsignalen versendenden Funksendeeinheit (36, 54), und mit einer elektrischen Energiequelle (62) zur Versorgung der Funksendeeinheit (36, 54) und umfassend eine gegenüber der Abfragebaugruppe (30, 40) stationär anordenbare Funkempfangseinheit (38) zum Empfangen und zum Auswerten, Weiterleiten und/oder Anzeigen der von der Funksendeeinheit empfangenen Signale, wobei die Funksendeeinheit (36, 54) derart ausgebildet ist, dass nur bei einer Änderung des Schaltzustandes des Schalters (32, 52) die Funkschaltsignale ausgesendet werden, **dadurch gekennzeichnet dass** zudem Funkkontaktkontrollsignale in regelmäßigen zeitlichen Abständen ausgesendet werden und die Funkempfangseinheit diese Signale auswertet, weiterleitet und/oder anzeigt, so dass ein Ausfallen des Abfragesystems frühzeitig erkannt werden kann.

2. Abfragesystem nach Anspruch 1 , **dadurch gekennzeichnet, dass** die Funksendeeinheit (36, 54) derart ausgebildet ist, dass sie den Status der Energiequelle überwacht und diesbezügliche Energiequellenkontrollsignale aussendet und dass die Funkempfangseinheit diese Signale auswertet, weiterleitet und/oder anzeigt.

3. Abfragesystem nach Anspruch 2, **dadurch gekennzeichnet, dass** die Funksendeeinheit (36, 54) derart ausgebildet ist, dass sie die Energiequellenkontrollsignale in regelmäßigen zeitlichen Abständen abfragt und/oder versendet.

4. Abfragesystem nach einem der vorhergehenden Ansprüche, **dadurch gekennzeichnet, dass** die Funksendeeinheit (36, 54) in einen Betriebsmodus, Einstellmodus und Lagermodus schaltbar ist.

5. Abfragesystem nach Anspruch 4, **dadurch gekennzeichnet, dass** das Schalten zwischen den Modi mittels eines berührungslos schaltenden Magnetelements erfolgt.

6. Abfragesystem nach einem der vorhergehenden Ansprüche, **dadurch gekennzeichnet, dass** die Energiequelle (62) eine Batterie oder ein Energieerzeuger ist.

7. Abfragesystem nach einem der vorhergehenden Ansprüche, **dadurch gekennzeichnet, dass** der Schalter (32, 52) ein Tastschalter, Stellschalter, Druckschalter oder ein magnetischer Näherungsschalter ist.

## Claims

1. Polling system for a moved machine component (10, 16, 24, 44), comprising a polling subunit (30, 40) that is to be disposed at the machine component end with at least one switch (32, 52) that operates without power in a certain state of the machine component or a certain position of a part of the machine component, a radio transmitter unit (36, 54) that evaluates the switching modes of the switch (32, 52) and transmits the evaluated switching signals with digital radio switching signals, and an electric power source (62) for supplying the radio transmitter unit (36, 54) and further comprising a radio receiver unit (38) that is stationary relative to the polling subunit (30, 40) and is used for receiving and evaluating, forwarding and/or displaying the signals received from the radio transmitter unit, wherein the radio transmitter unit (36, 54) is constituted such that the radio switching signals are only transmitted upon a change in the switching mode of the switch (32, 52), **characterized in that** radio contact control signals are furthermore being transmitted at regular time intervals, wherein the radio receiver unit evaluates, passes on, and/or displays these signals to permit prompt recognition of polling system failure.

2. Polling system according to claim 1, **characterized in that** the radio transmitter unit (36, 54) is constituted such that it monitors the status of the power source and transmits relevant power source check signals and that the radio receiver unit evaluates, passes on and/or displays these signals.

3. Polling system according to claim 2, **characterized in that** the radio transmitter unit (36, 54) is constituted such that it polls and/or transmits the power source check signals at regular intervals.

4. Polling system according to any one of the previous claims, **characterized in that** the radio transmitter unit (36, 54) can be switched into an operating mode, setting mode and storage mode.

5. Polling system according to the claim 4, **characterized in that** switching between the modes is performed by means of a contactless magnetic switching element.

6. Polling system according to any one of the previous claims, **characterized in that** the power source (62) is a battery or power generator.

7. Polling system according to any one of the previous claims, **characterized in that** the switch (32, 52) is a momentary-contact switch, maintained-contact switch, pressure switch, or magnetic proximity switch.

## Revendications

1. Système d'interrogation pour un composant de machine mobile (10, 16, 24, 44) avec un bloc d'interrogation (30, 40) destiné à être agencé côté composant de machine, comprenant au moins un commutateur (32, 52) libérant de l'énergie d'alimentation lorsque le composant de machine est dans un certain état ou qu'une pièce de composant de machine se trouve dans une certaine position, une unité émettrice radio (36, 54) interprétant les états de commutation du commutateur (32, 52) et envoyant les signaux de commutation interprétés avec des signaux de commutation radio numériques, une source d'énergie électrique (62) pour alimenter l'unité émettrice radio (36, 54) et une unité réceptrice radio (38) pouvant être agencée de manière fixe par rapport au bloc d'interrogation (30, 40) destinée à recevoir et à interpréter, transférer et/ou indiquer les signaux reçus depuis l'unité émettrice radio, l'unité émettrice radio (36, 54) étant réalisée de telle façon que les signaux de commutation radio ne sont envoyés qu'en cas de modification de l'état de commutation du commutateur (32, 52), **caractérisé en ce que** des signaux de contrôle de contact radio sont en outre envoyés à des intervalles réguliers et **en ce que** l'unité réceptrice radio interprète, transfère et/ou indique ces signaux de façon à pouvoir détecter à temps toute défaillance du système d'interrogation.

2. Système d'interrogation selon la revendication 1, **caractérisé en ce que** l'unité émettrice radio (36, 54) est réalisée de telle façon qu'elle surveille l'état de la source d'énergie et envoie des signaux de contrôle des sources d'énergie à ce sujet et **en ce que** l'unité réceptrice radio interprète, transfère et/ou indique ces signaux.

3. Système d'interrogation selon la revendication 2, **caractérisé en ce que** l'unité émettrice radio (36, 54) est réalisée de telle façon qu'elle interroge et/ou envoie des signaux de contrôle des sources d'énergie à des intervalles réguliers.

4. Système d'interrogation selon l'une des revendications précédentes, **caractérisé en ce que** l'unité émettrice radio (36, 54) peut être commutée en mode fonctionnement, en mode réglage et en mode entreposage.

5. Système d'interrogation selon la revendication 4, **caractérisé en ce que** la commutation entre les différents modes se fait au moyen d'un élément magnétique sans contact.

6. Système d'interrogation selon l'une des revendications précédentes, **caractérisé en ce que** la source d'énergie (62) est une batterie ou un générateur d'énergie.

7. Système d'interrogation selon l'une des revendications précédentes, **caractérisé en ce que** le commutateur (32, 52) est un bouton-poussoir, un commutateur, un interrupteur à pression ou bien un détecteur de proximité magnétique.
